# EUROPEAN PATENT APPLICATION

(11) **EP 4 266 400 A1**
(43) Date of publication of application: **25.10.2023**
(21) Application number: 22908802.6
(22) Date of filing: 27.01.2022
(51) Int. Cl.: H01M 4/13, H01M 10/0525

(54) **CARBON FIBER LITHIUM REPLENISHMENT FILM AND PREPARATION METHOD THEREFOR AND SECONDARY BATTERY AND ELECTRICAL DEVICE COMPRISING SAME**

(71) Applicant: Contemporary Amperex Technology Co., Limited, Ningde City, Fujian 352100 (CN)
(72) Inventor: MIAO, Siyu, Ningde City, Fujian 352100 (CN); WANG, Zhiming, Ningde City, Fujian 352100 (CN); LI, Guanzhou, Ningde City, Fujian 352100 (CN); HUANG, Caixia, Ningde City, Fujian 352100 (CN); TANG, Minghao, Ningde City, Fujian 352100 (CN)
(74) Representative: Gong, Jinping
(86) International application number: PCT/CN2022/074287
(87) International publication number: WO 2023/141871

(57) **Abstract**

The present application provides a carbon fiber lithium supplement film, a preparation method thereof, a second battery and a power consumption apparatus including the same. The carbon fiber lithium supplement film including a carbon fiber and a lithium supplement agent embedded in the carbon fiber, a diameter of the carbon fiber is 450nm-850nm, and a mass percentage the lithium supplement agent in the carbon fiber lithium supplement film is 40%-80.5%, and optionally 55%-75%. A battery using the carbon fiber lithium supplement film has an improved gram capacity and a first coulombic efficiency.

## Description

### TECHNICAL FIELD

The present application relates to the field of battery technologies, and in particular, to a carbon fiber lithium supplement film, a preparation method thereof, a second battery and a power consumption apparatus including the same.

### BACKGROUND

In recent years, secondary battery are widely applied to energy storage power systems, such as hydraulic, thermal, wind and solar power stations, as well as many fields such as electrical tools, electric bicycles, electric motorcycles, electric vehicles, military equipment and aerospace. However, a secondary battery, especially a lithium battery, usually has a lithium metal deposition during the use, which leads to the decline of battery performance. In this regard, the industry usually uses a method of adding a lithium supplement agent to slow down the above decline of battery performance. However, there are many problems in the method of the lithium supplement agent used in the prior art, and the lithium supplement method still needs to be improved.

### SUMMARY

The present application is made in view of the above subject, and a purpose thereof is to provide a carbon fiber lithium supplement film, so that a secondary battery using this lithium supplement film has an improved gram capacity and a first coulombic efficiency.

In order to achieve the above purpose, the present application provides a carbon fiber lithium supplement film, a preparation method thereof, a second battery and a power consumption apparatus including the same.

A first aspect of the present application provides a carbon fiber lithium supplement film, including a carbon fiber and a lithium supplement agent embedded in the carbon fiber, a diameter of the carbon fiber is 450nm-850nm, and a mass percentage the lithium supplement agent in the carbon fiber lithium supplement film is 40%-80.5%, and optionally 55%-75%.

In any embodiment, a thickness of the carbon fiber lithium supplement film is 2µm-10µm, or optionally 3.5µm-8µm.

In any embodiment, a conductivity of the carbon fiber lithium supplement film is 40S • cm⁻¹-130S • cm⁻¹, and optionally 60S • cm⁻¹-100S • cm⁻¹.

In any embodiment, the lithium supplement agent is in a form of a particle, and a particle size of the particle Dᵥ₅₀≤850nm, and optionally 200nm-550nm.

In any embodiment, an areal density of the carbon fiber lithium supplement film is 0.8mg/cm²-3mg/cm², and optionally 1.2mg/cm²-1.9mg/cm².

In any embodiment, the lithium supplement agent is one or more of Li₅FeO₄, Li₆CoO₄, Li₂O and Li₂S.

A second aspect of the present application further provides a method for preparing a carbon fiber lithium supplement film, including the following steps:
(1) A polymer being dissolved in a solvent, then a lithium supplement agent is added and dispersed to obtain a dispersion;
(2) The dispersion being step (1) is electrospun to make a carbon fiber lithium supplement film precursor; and
(3) The carbon fiber lithium supplement film precursor being pre-oxidized and carbonized to obtain a carbon fiber lithium supplement film; and
the carbon fiber lithium supplement film including a carbon fiber and a lithium supplement embedded in the carbon fiber, a diameter of the carbon fiber is 450nm-850nm, and a mass percentage the lithium supplement agent in the carbon fiber lithium supplement film is 40%-80.5%, and optionally 55%-75%.

In any embodiment, the polymer is one or more of polyacrylonitrile, polyvinyl alcohol and polyacrylic acid; and/or, a concentration of the polymer in the solvent is 0.5g/10ml⁻³g/10ml, and optional 0.8g/10ml-2g/10ml.

In any embodiment, the solvent is selected from one or more of dimethylformamide, dimethylsulfoxide and sulfolane.

In any embodiment, where in the electrospinning, an electrostatic high voltage is 10kv-25kv, and optionally 15kv-20kv.

In any embodiment, where in the electrospinning, a receiving distance is 8cm-30cm, and optionally 10cm-25cm.

In any embodiment, where in the electrospinning, a spinning rate is 1mL/h to 6mL/h, and optionally 1.5mL/h to 4mL/h.

In any embodiment, where in the electrospinning, a spinning time is 12h-60h, and optional 24h-48h.

In any embodiment, where in the pre-oxidation, an initial temperature is 10°C-30°C, and optionally 22°C-28°C.

In any embodiment, where in the pre-oxidation, a heating rate is 1°C/min-5°C/min, and optionally 2°C/min-4°C/min.

In any embodiment, where in the pre-oxidation, a holding temperature is 250°C/min-300°C/min, and optionally 260°C/min-290°C/min.

In any embodiment, where in the pre-oxidation, a soaking time is 1h-5h, and optionally 2h-3h.

In any embodiment, where in the pre-oxidation, a gas flow is 15ml/min-50ml/min, and optionally 20ml/min-40ml/min.

In any embodiment, where in the carbonization treatment, an initial temperature is 15°C-30°C, and optionally 22°C-28°C.

In any embodiment, where in the carbonization treatment, a heating rate is 2°C/min-8°C/min, and optionally 3°C/min-7°C/min.

In any embodiment, where in the carbonization treatment, a holding temperature is 400°C-600°C, and optionally 450°C-550°C.

In any embodiment, where in the carbonization treatment, a soaking time is 1h-5h, and optionally 2h-4h.

In any embodiment, where in the carbonization treatment, a gas flow is 20ml/min-60ml/min, and optionally 30ml/min-50ml/min.

A third aspect of the present application further provides a secondary battery, including the carbon fiber lithium supplement film described in the present application or the carbon fiber lithium supplement film prepared according to the method described in the application.

A fourth aspect of the present application further provides a power consumption apparatus, including the secondary battery according to the third aspect of the present application.

### BRIEF DESCRIPTION OF DRAWINGS

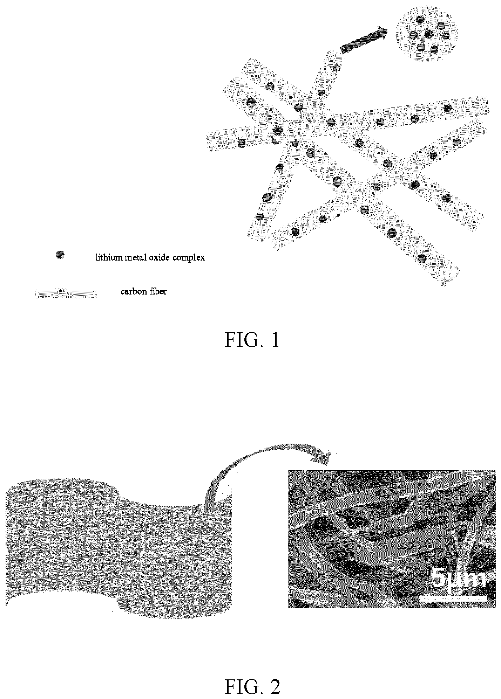

FIG. 1 is a schematic structural diagram of a carbon fiber according to an embodiment of the present application.
FIG. 2 is a scanning electron diagram of a carbon fiber according to an embodiment of the present application.

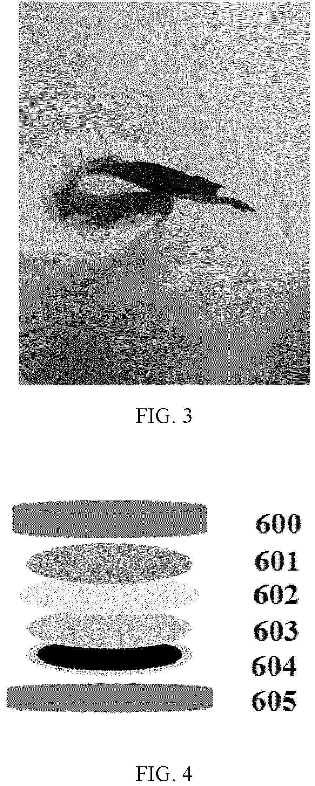

FIG. 3 is a diagram of a carbon fiber lithium supplement film.
FIG. 4 is a schematic diagram of a structure of a full battery according to an embodiment of the present application.
FIG. 5 is a performance comparison between a battery using the lithium supplement film of the present invention and a battery (a lithium iron phosphate (LFP) battery) not using the lithium supplement film of the present invention.
FIG. 6 is a schematic diagram of a secondary battery according to an embodiment of the present application.
FIG. 7 is an exploded view of the secondary battery according to an embodiment of the present application as shown in FIG. 6.
FIG. 8 is a schematic diagram of a battery module according to an embodiment of the present application.
FIG. 9 is a schematic diagram of a battery pack according to an embodiment of the present application.
FIG. 10 is an exploded view of the battery pack according to an embodiment of the present application as shown in FIG. 9.
FIG. 11 is a schematic diagram of a power consumption apparatus in which a secondary battery is used as a power source according to an embodiment of the present application.

### DESCRIPTION OF REFERENCE SIGNS

1 battery pack; 2 upper box; 3 lower box; 4 battery module; 5 secondary battery; 51 housing; 52 electrode assembly; 53 top cover assembly; 600 negative electrode shell; 601 negative electrode; 602 separator; 603 lithium supplement film; 604 positive electrode; 605 positive electrode shell.

### DESCRIPTION OF EMBODIMENTS

Hereinafter, embodiments that specifically disclose a carbon fiber lithium supplement film and a preparation method thereof, a positive electrode sheet, a negative electrode sheet, a secondary battery, a battery module, a battery pack and a power consumption apparatus of the present application may be described in detail with reference to the accompanying drawings as appropriate. However, unnecessarily detailed descriptions may be omitted in some cases. For example, detailed descriptions of well-known matters and repeated descriptions of practically identical structures are omitted. This is done to avoid unnecessarily redundant descriptions for ease of understanding by persons skilled in the art. In addition, the drawings and the following description are provided for a full understanding of the present application by persons skilled in the art, and are not intended to limit the subject matter in the claims.

A "range" disclosed in the present application is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are further contemplated. In addition, if the minimum range values listed are 1 and 2, and the maximum range values listed are 3, 4 and 5, all the following ranges are contemplated: 1-3, 1-4, 1-5, 2-3, 2-4, and 2-5. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form a new technical solution.

Unless otherwise specified, all technical features and optional technical features of the present application may be combined with each other to form a new technical solution.

Unless otherwise specified, all steps of the present application may be performed sequentially or randomly, and optionally, performed sequentially. For example, a method includes steps (a) and (b), which means that the method may include steps (a) and (b) performed sequentially, or steps (b) and (a) performed sequentially. For example, the method mentioned may further include step (c), which means that step (c) may be added to the method in any order, for example, the method may include steps (a), (b) and (c), steps (a), (c) and (b), steps (c), (a) and (b), or the like.

Unless otherwise specified, "comprising" and "containing" mentioned in the present application are open-ended or closed-ended. For example, the "comprising" and "containing" may mean that other components that are not listed may further be comprised or contained, or only listed components may be comprised or contained.

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

In the present application, unless otherwise specified, all operations are performed at normal temperature (25°C) and normal pressure (101kPa).

### [SECONDARY BATTERY]

A secondary battery, also known as a rechargeable battery or a storage battery, refers to a battery that may activate active materials by charging after the battery is discharged and continue to be used.

Typically, a secondary battery includes a positive electrode sheet, a negative electrode sheet, a separator, and an electrolytic solution. During the charging and discharging process of the battery, an active ion (such as a lithium ion) is inserted and extracted back and forth between the positive electrode sheet and the negative electrode sheet. The separator is provided between the positive electrode sheet and the negative electrode sheet, and mainly plays a role of preventing the short circuit of the positive electrode and negative electrode, and at the same time, it may allow the active ion to pass through. The electrolytic solution plays a role of conducting the active ion between the positive electrode sheet and the negative electrode sheet.

A first aspect of the present application provides a carbon fiber lithium supplement film, including a carbon fiber and a lithium supplement agent embedded in the carbon fiber, a diameter of the carbon fiber is 450nm-850nm, and optionally 550nm-750nm; and a mass percentage the lithium supplement agent in the carbon fiber lithium supplement film is 40%-80.5%, and optionally 55%-75%.

Although a mechanism is still unclear, the applicant accidentally found that: by electrospinning a polymer together with the lithium supplement agent, and then after a carbonization treatment, a lithium supplement film with good winding performance and a flat film surface may be obtained, and the use of this lithium supplement film may significantly improve a gram capacity and a first coulombic efficiency of the battery. The carbon fiber lithium supplement film of the present invention may reduce a deterioration speed of the lithium supplement agent in the normal temperature and humidity environment by embedding the lithium supplement agent in the carbon fiber. In addition, the lithium supplement film of the present invention has less polarization and is more likely to exert capacity.

In some embodiments, the carbon fiber lithium supplement film includes a carbon fiber and a lithium supplement agent embedded in the carbon fiber, a diameter of the carbon fiber is 450nm-850nm, and optionally 550nm-750nm. In the present application, those skilled in the art should understand that the term "embedding" means that a lithium supplement agent particle is covered by a carbon fiber or embedded in the carbon fiber. In other words, the lithium supplement agent particle may be completely covered by the carbon fiber or partially covered by the carbon fiber. Optionally, no less than 70%, optionally no less than 80%, and further optionally no less than 90% of the lithium supplement agent particle are completely covered by the carbon fiber. In addition, those skilled in the art should further understand that in the carbon fiber lithium supplement film of the present application, some carbon fibers may aggregate, such as a plurality of carbon fibers combined into a thicker carbon fiber bundle, which may be seen through a scanning electron microscope. In this case, a carbon fiber diameter according to the present application still refers to a single carbon fiber.

In some embodiments, a thickness of the carbon fiber lithium supplement film is 2µm-10µm, and optionally 3.5µm-8µm. If the thickness is too thick, an ion transmission may be affected, resulting in deterioration of battery performance; and if the thickness is too thin, a lithium supplement effect cannot be achieved.

In the present application, the thickness of the lithium supplement film may be measured by a conventional method, for example, by using a screw micrometer to measure.

In some embodiments, a conductivity of the carbon fiber lithium supplement film is 40S •cm⁻¹-130S •cm⁻¹, and optionally 60S •cm⁻¹-100S •cm⁻¹. The carbon fiber lithium supplement film of the present application itself has a good conductivity, so there is no need to use an additional conductive layer, which simplifies a manufacturing process of a battery cell, and avoids a risk of stripping when using a multi-layer film in the prior art.

In the present application, a method for measuring the conductivity of the carbon fiber lithium supplement film of the present invention is known to those skilled in the art, for example, it may be measured in the following manner: a composite lithium supplement film is used as a positive electrode, and a metal lithium is used as a negative electrode, a membrane and an electrolytic solution used in the embodiments are assembled into a button-type half battery, which is tested using a LAND electrochemical workstation, and an electrochemical impedance is measured by alternating current with a frequency of 10⁻¹~10⁵ and an amplitude of 5Hz.

In some embodiments, the lithium supplement agent is in a form of a particle, and a particle size of the particle Dᵥ₅₀≤850nm, and optionally 200nm-550nm, and further optionally 300nm-500nm. By setting the particle size of the lithium supplement agent of the present application within the above range, it may be better embedded in the carbon fiber. A lithium supplement agent with the above particle size may be purchased directly, or the lithium supplement agent with a larger particle size may be ground to the above range by using a grinder.

In the present application, a particle size Dᵥ₅₀ of the particle may be measured by using a laser particle diameter analyzer (such as Malvern Master Size 3000) with reference to the standard GB/T 19077.1-2016. Where a physical definition of Dᵥ₅₀ is as follows:

Dᵥ₅₀: a particle size when a percentage of cumulative volume distribution of the lithium supplement agent particle reaches 50%.

In some embodiments, an areal density of the carbon fiber lithium supplement film is 0.8mg/cm²-3mg/cm², and optionally 1.2mg/cm²-1.8mg/cm².

In the present application, the meaning of the areal density is well known in the art, and it may be tested using a method known in the art. For example, the carbon fiber lithium supplement film prepared in the present application is punched into a small disc with an area of S1, weighed, and recorded as M1. The areal density of the carbon fiber lithium supplement film of the present invention=M1/S1. In order to ensure the accuracy of test results, multiple groups (for example, 10 groups) of samples to be tested may be tested, and an average value is calculated as a test result.

In some embodiments, the lithium supplement agents are those lithium supplement agents commonly used in the art, and may be selected from one or more of Li₅FeO₄, Li₆CoO₄, Li₂O and Li₂S.

In some embodiments, a content of the lithium supplement agent may also be adjusted based on quality of a positive active material used as needed, optionally, the lithium supplement agent in the carbon fiber lithium supplement film accounts for 2%-6% of a mass of the positive active material, and optionally 3%-5%. By setting the amount of lithium supplement agent within the above range, a good lithium supplement effect may be achieved without deteriorating the electrical performance of the battery cell. In the present application, the lithium supplement agent used is usually of poor conductivity, and when its amount is too small, the required lithium supplement effect cannot be achieved, while when its amount is too high, it will have too high polarization effect, thus deteriorating capacity and performance of the battery.

A second aspect of the present application further provides a method for preparing a carbon fiber lithium supplement film, including the following steps:
(1) A polymer being dissolved in a solvent, then a lithium supplement agent being added and dispersed to obtain a dispersion;
(2) The dispersion in step (1) being electrospun to make a carbon fiber lithium supplement film precursor; and
(3) The carbon fiber lithium supplement film precursor being pre-oxidized and carbonized to obtain a carbon fiber lithium supplement film; and
the carbon fiber lithium supplement film including a carbon fiber and a lithium supplement embedded in the carbon fiber, a diameter of the carbon fiber is 450nm-850nm, and a mass percentage the lithium supplement agent in the carbon fiber lithium supplement film is 40%-80.5%, and optionally 55%-75%.

By using the carbon fiber lithium supplement film of the present invention, a problem of agitation gelation caused by directly adding the lithium supplement agent to the active material in the prior art may be avoided. In addition, compared with a membrane lithium supplement/positive electrode coating surface lithium supplement method in the prior art, since the carbon fiber lithium supplement film prepared by the method of the present invention has a flat film surface, a risk of the membrane being punctured and an appearance of a self-discharging bad product may be avoided.

In the present application, the diameter of the carbon fiber may be measured by a conventional method in the art, for example, by using a statistical method of scanning electron microscope. Those skilled in the art may understand that the diameter described in the application should be an average diameter. In other words, the carbon fiber also includes the carbon fiber with diameters larger or smaller than the above range. However, the diameter of the carbon fiber is within the scope of the present invention, which is not less than 70%, optionally not less than 80%, further optionally not less than 90% and also optionally not less than 95%.

In the present application, a scanning electron microscope test may be performed according to a method commonly used in the art. For example, the test may be performed using a ZEISS sigma 300 scanning electron microscope, and then the test is performed with reference to a standard JY/T010-1996.

In some embodiments, the polymer is a polymer commonly used in the art to prepare the carbon fiber, and the polymer may be one or more of polyacrylonitrile, polyvinyl alcohol and polyacrylic acid.

In some embodiments, a number average molecular weight of the polymer may be 10,000 to 30,000, and optionally 12,000 to 20,000.

In the present application, the number average molecular weight is measured by a gel permeation chromatography (GPC) method in accordance with GB/T 21863-2008 *Gel permeation chromatography (GPC) Tetrahydrofuran as elution solvent* (equivalent to using a German standard DIN 55672-1: 2007 *Gel permeation chromatography (GPC)-Part 1: Tetrahydrofuran (THF) as elution solvent*).

In some embodiments, a concentration of the polymer in the solvent is 0.5g/10ml⁻³g/10ml, optional 0.8g/10ml-2g/10ml, and further optional 0.8g/10ml-1.5g/10ml.

In some embodiments, a mass ratio of the lithium supplement agent to the polymer may be 5:1 to 0.2:1, optionally 0.5:1 to 4:1, and further optionally 0.6:1 to 2:1.

In some embodiments, the solvent is selected from one or more of dimethylformamide, dimethylsulfoxide and sulfolane.

Those skilled in the art may understand that some explanations about the carbon fiber lithium supplement film according to the first aspect of the present application are also correspondingly applicable to the second aspect of the present application.

In some embodiments, in step (1), the dispersion can be performed in a conventional way, such as stirring, shaking or with the help of ultrasonic waves.

In the present application, electrospinning may use electrospinning equipment conventionally used in the art. As long as it may obtain the carbon fiber lithium supplement film according to the first aspect of the application, it may optionally use the parameter settings described below.

In some embodiments, where in the electrospinning, an electrostatic high voltage is 10kv-25kv, and optionally 15kv-20kv. Too high or too low the high positive pressure will result in a poor carbon fiber morphology and thereby affecting performance.

In some embodiments, where in the electrospinning, a receiving distance is 8cm-30cm, and optionally 10cm-25cm. Too far or too close the receiving distance will result in a poor consistency of the thickness of the lithium supplement film.

In some embodiments, where in the electrospinning, for example, in a case of 20-120mL polymer solution is used, a spinning time may be 12h to 60h, and optionally 24h to 36h.

In some embodiments, where a spinning rate is 1mL/h to 6mL/h, and optionally 1.5mL/h to 4mL/h. In the present application, it should be understood that the term "spinning rate" is an advance rate of the syringe in electrospinning.

In some embodiments, where in the pre-oxidation, an initial temperature is 10°C-30°C, and optionally 22°C-28°C.

In some embodiments, where in the pre-oxidation, a heating rate is 1°C/min-5°C/min, and optionally 2°C/min-4°C/min.

In some embodiments, where in the pre-oxidation, a holding temperature is 250°C/min-300°C/min, and optionally 260°C/min-290°C/min.

In some embodiments, where in the pre-oxidation, a soaking time is 1h-5h, and optionally 2h-3h.

In some embodiments, where in the pre-oxidation, a gas flow is 15ml/min-50ml/min, and optionally 20ml/min-40ml/min. In the present application, the gas that may be used is one or more of nitrogen and argon.

In some embodiments, where in the carbonization treatment, an initial temperature is 15°C-30°C, and optionally 22°C-28°C.

In some embodiments, where in the carbonization treatment, a heating rate is 2°C/min-8°C/min, and optionally 3°C/min-7°C/min.

In some embodiments, where in the carbonization treatment, a holding temperature is 400°C-600°C, and optionally 450°C-550°C.

In some embodiments, where in the carbonization treatment, a soaking time is 1h-5h, and optionally 2h-4h.

In some embodiments, where in the carbonization treatment, a gas flow is 20ml/min-60ml/min, and optionally 30ml/min-50ml/min. In the present application, the gas that may be used is one or more of nitrogen and argon

### [Positive Electrode Sheet]

A positive electrode sheet includes a positive electrode current collector and a positive electrode film layer provided on at least one surface of the positive electrode current collector, and the positive film layer includes a positive active material.

As an example, the positive electrode current collector has two opposite surfaces in its thickness direction, and the positive electrode film layer is provided on either or both of the two opposite surfaces of the positive electrode current collector.

In some embodiments, the positive electrode current collector may use a metal foil or a composite current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, the positive active material may use a positive active material for batteries known in the art. As an example, the positive active material may include at least one of the following materials: an olivine-structured lithium-containing phosphate, a lithium transition metal oxide, and their respective modified compounds. However, the present application is not limited to these materials, and other conventional materials that may be used as the positive active material for the battery may further be used. One type of these positive active materials may be used alone, or two or more types thereof may be used in combination. Where examples of the lithium transition metal oxide may include, but are not limited to, at least one of lithium cobalt oxides (such as LiCoO₂), lithium nickel oxides (such as LiNiO₂), lithium manganese oxides (such as LiMnO₂, LiMn₂O₄), lithium nickel cobalt oxides, lithium manganese cobalt oxides, lithium nickel manganese oxides, lithium nickel cobalt manganese oxides (such as LiNi_{1/3}Co_{1/3}Mn_{1/3}O₂ (NCM₃₃₃ for short), LiNi_{0.5}Co_{0.25}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short)), LiNi_{0.8}Co_{0.1}Mn_{0.1}O₂ (NCM₈₁₁ for short)), lithium nickel cobalt aluminum oxides (such as LiNi_{0.85}Co_{0.15}Al_{0.05}O₂) and their modified compounds, or the like. Examples of the olivine-structured lithium-containing phosphate may include, but are not limited to, at least one of lithium iron phosphate (such as LiFePO₄ (LFP for short)), a composite of lithium iron phosphate and carbon, lithium manganese phosphate (such as LiMnPO₄), a composite of lithium manganese phosphate and carbon, lithium manganese iron phosphate, and a composite of lithium manganese iron phosphate and carbon.

In some embodiments, the positive electrode film layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluoro containing acrylate resin.

In some embodiments, the positive electrode film layer may further optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet may be prepared in the following manner. The foregoing components for preparing the positive electrode sheet such as the positive active material, the conductive agent, the binder, and any other components are dispersed in a solvent (such as N-methylpyrrolidone), to form a positive electrode slurry; and the positive electrode slurry is coated on the positive electrode current collector, and then after drying, cold pressing and other processes, a positive electrode sheet may be obtained.

### [Negative electrode sheet]

A negative electrode sheet includes a negative electrode current collector and a negative electrode film layer provided on at least one surface of the negative electrode current collector, and the negative electrode film layer includes a negative active material.

As an example, the negative electrode current collector has two opposite surfaces in its thickness direction, and the negative electrode film layer is provided on either or both of the two opposite surfaces of the negative electrode current collector.

In some embodiments, the negative electrode current collector may use a metal foil or a composite current collector. For example, as the metal foil, a copper foil may be used. The composite current collector may include a polymer material base layer and a metal layer formed on at least one surface of the polymer material base layer. The composite current collector may be formed by forming a metal material (copper, copper alloy, nickel, nickel alloy, titanium, titanium alloy, silver and silver alloy, etc.) on a polymer material substrate (such as a substrate of polypropylene (PP), polyethylene terephthalate (PET), polybutylene terephthalate (PBT), polystyrene (PS), polyethylene (PE), or the like).

In some embodiments, the negative active material may use a negative active material for batteries known in the art. As an example, the negative active material may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compounds, silicon-carbon composites, silicon-nitrogen composites, and silicon alloys. The tin-based material may be selected from at least one of elemental tin, tin oxide compounds and tin alloys. However, the present application is not limited to these materials, and other conventional materials that may be used as the negative active material for the battery may further be used. One type of these negative active materials may be used alone, or two or more types may be used in combination.

In some embodiments, the negative electrode film layer further optionally includes a binder. As an example, the binder may be selected from at least one of styrene-butadiene rubber (SBR), polyacrylic acid (PAA), polyacrylate sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may selected from at least one of superconducting carbon, acetylene black, carbon black, Ketjen black, carbon dot, carbon nanotube, grapheme and carbon nanofibe.

In some embodiments, the negative film layer may further optionally include other adjuvants, for example, thickening agents (such as sodium carboxymethyl cellulose (CMC-Na)), or the like.

In some embodiments, the negative electrode sheet may be prepared by the following manner: the above components used to prepare the negative electrode sheet, such as the negative active material, the conductive agent, the binder and any other components are dispersed in a solvent (such as deionized water) to form a negative electrode slurry; and the negative electrode slurry is coated on the negative electrode current collector, and after drying, cold pressing and other processes, the negative electrode sheet may be obtained.

### [Electrolyte]

An electrolyte plays the role of conducting an ion between a positive electrode sheet and a negative electrode sheet. The type of the electrolyte is not specifically limited in the present application, and may be selected according to needs. For example, the electrolyte may be liquid, gel or all solid.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluorarsenate, lithium bisfluorosulfonimide, lithium bistrifluoromethanesulfonimidate, lithium trifluoromethanesulfonate, lithium difluorophosphate, lithium difluorooxalateborate, lithium bisoxalateborate, lithium difluorobisoxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte also optionally includes additives. As an example, the additive may include a negative electrode film-forming additive, or a positive electrode film-forming additive, or may further include an additive that may improve specific performance of the battery, such as, an additive for improving overcharge performance of the battery, or an additive for improving high-temperature performance or low-temperature performance of the battery.

### [Separator]

In some embodiments, the secondary battery further includes a separator. There is no particular limitation on the type of the separator in the present application, and any well-known porous-structure separator with good chemical stability and mechanical stability may be selected.

In some embodiments, the material of the separator may be selected from at least one of glass fiber, non-woven fabric, polyethylene, polypropylene, and polyvinylidene fluoride. The separator may be a single-layer thin film, or may be a multi-layer composite thin film, and is not particularly limited. When the separator is the multi-layer composite thin film, the materials of each layer may be the same or different, and are not particularly limited.

In some embodiments, the positive electrode sheet, the negative electrode sheet and the separator may be made into an electrode assembly through a winding process or a lamination process.

In some embodiments, a secondary battery may include an outer package. The outer package may be used to package the above electrode assembly and electrolyte.

In some embodiments, the outer package of the secondary battery may be a hard shell such as a hard plastic shell, an aluminum shell, or a steel shell. The outer package of the secondary battery may be a soft package, such as a bag-type soft package. A material of the soft package may be plastic, for example, polypropylene, polybutylene terephthalate, and polybutylene succinate may be listed.

A third aspect of the present application provides a secondary battery, including the carbon fiber lithium supplement film according to the first aspect of the present application or the carbon fiber lithium supplement film prepared according to the second aspect of the application.

A fourth aspect of the present application further provides a power consumption apparatus, including the secondary battery according to the third aspect of the present application

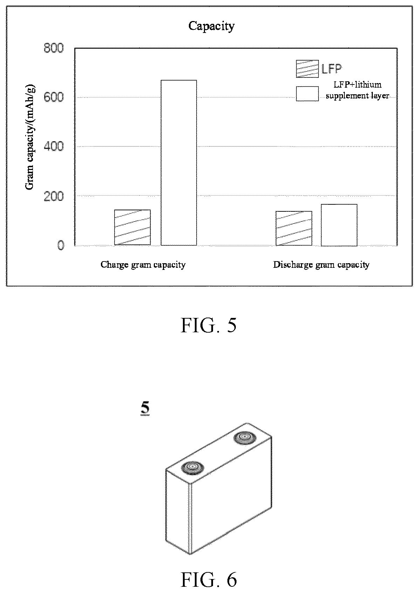

The shape of the secondary battery is not particularly limited in the present application, and may be cylindrical, square, or any other shapes. For example, FIG. 6 shows a secondary battery 5 of a square structure as an example.

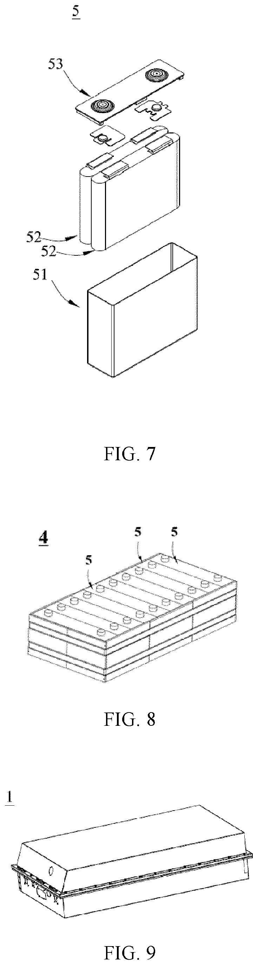

In some embodiments, referring to FIG. 7, the outer package may include a housing 51 and a cover plate 53. Where the housing 51 may include a bottom plate and a side plate connected to the bottom plate. The bottom plate and the side plate are enclosed to form an accommodating cavity. The housing 51 has an opening communicating with the accommodating cavity, and the cover plate 53 may cover the opening to close the accommodating cavity. A positive electrode sheet, a negative electrode sheet, and a membrane may be subject to a winding process or a lamination process to form an electrode assembly 52. The electrode assembly 52 is packaged in the accommodating cavity. The electrolytic solution is infiltrated in the electrode assembly 52. The number of electrode assemblies 52 included in the secondary battery 5 may be one or more, and the specific number may be selected by those skilled in the art according to specific actual needs.

In some embodiments, secondary batteries may be assembled into a battery module, and the number of secondary batteries included in the battery module may include one or more, and the specific number may be selected by those skilled in the art according to application and capacity of the battery module.

FIG. 8 shows a battery module 4 as an example. Referring to FIG. 9, in the battery module 4, a plurality of secondary batteries 5 may be sequentially arranged along a length direction of the battery module 4. Certainly, they may be arranged in accordance with any other manner. Further, the plurality of secondary batteries 5 may be fixed by using fasteners.

Optionally, the battery module 4 may further include a shell with an accommodating space, and the plurality of secondary batteries 5 are accommodated in the accommodating space.

In some embodiments, the above battery modules may be further assembled into a battery pack, and the number of battery modules included in the battery pack may be one or more, and the specific number may be selected by those skilled in the art according to application and capacity of the battery pack.

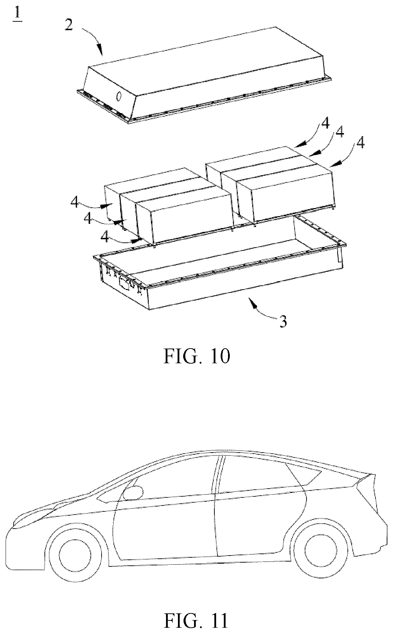

FIG. 9 and FIG. 10 show a battery pack 1 as an example. Referring to FIG. 10 and FIG. 11, the battery pack 1 may include a battery box and a plurality of battery modules 4 disposed in the battery box. The battery box includes an upper box 2 and a lower box 3. The upper box 2 may cover the lower box 3 and form an enclosed space for accommodating the battery modules 4. The plurality of battery modules 4 may be arranged in the battery box in any manner.

In addition, the present application further provides a power consumption apparatus, the power consumption apparatus including at least one of the secondary battery, the battery module, or the battery pack provided in the present application. The secondary battery, the battery module, or the battery pack may be used as a power source of the power consumption apparatus or may be used as an energy storage unit of the power consumption apparatus. The power consumption apparatus may include a mobile device (for example, a mobile phone, a notebook computer, and the like), an electric vehicle (for example, a pure electric vehicle, a hybrid electric vehicle, a plug-in hybrid electric vehicle, an electric bicycle, an electric scooter, an electric golf cart, an electric truck, and the like), an electric train, a ship and a satellite, an energy storage system, or the like, but is not limited to this.

As the power consumption apparatus, a secondary battery, a battery module, or a battery pack may be selected according to usage requirements.

FIG. 11 shows a power consumption apparatus as an example. The power consumption apparatus is a pure electric vehicle, a hybrid electric vehicle, a plug-in hybrid electric vehicle, or the like. To meet a requirement of the power consumption apparatus for high power and high energy density of a secondary battery, a battery pack or a battery module may be used.

### [Embodiment]

Hereinafter, embodiments of the present application will be described. The embodiments described below are illustrative, only used to explain the present application, and should not be construed as a limitation to the present application. Where specific techniques or conditions are not specified in the embodiments, they are performed according to techniques or conditions described in the literature in the art or according to product specifications. The reagents or instruments used without specifying the manufacturer are conventional products that may be obtained from the market.

### Embodiment 1

Preparation of carbon fiber lithium supplement film: 5g PAN (polyacrylonitrile, with a number average molecular weight of 15,000) is dissolved in 60mL DMF (dimethylformamide), and 5g Li₅FeO₄ (Dᵥ₅₀: 500nm) is added. At 60°C, a dispersion is obtained by magnetic stirring for 4h. The dispersion is transferred into a disposable syringe and is put into an electrostatic spinning instrument (Beijing Yongkang Leye Technology Development Co., Ltd, M01-001, the same below) with the following parameters: a diameter of a spinneret is 1.0mm; a static high voltage is 20kv; a receiving distance is 15cm; an advance speed of the syringe is 2mL/h; a spinning time is 30h; and an aluminum foil is closely attached to the receiving roller to receive a spinning solution, and a carbon fiber lithium supplement film precursor is obtained after spinning. The above precursor is transferred to a muffle furnace and preoxidized under the following conditions: an initial temperature is 20°C; a heating rate is 3°C/min; a holding temperature is 280°C; a soaking time is 2h; and a nitrogen flow is 30ml/min. And then a carbonization treatment is carried out, and the carbonization treatment uses the following conditions: an initial temperature is 25°C; a heating rate is 5°C/min; a holding temperature is 500°C; and a soaking time is 2h; a nitrogen flow rate is 40ml/min to obtain a composite carbon fiber lithium supplement film with a mass of 7.46g, an areal density of 22.95mg/1540mm² (1.49mg/cm²), a fiber diameter of 650nm and a film thickness of 5µm, and the conductivity is 72.4S/cm. The carbon fiber lithium supplement film has good tensile property, and may be folded 100 times, still maintaining good integrity. The subsequent preparation of a full battery is described below.

### Embodiment 2

Preparation of carbon fiber lithium supplement film: 10g PAN (polyacrylonitrile, with a number average molecular weight of 15,000) is dissolved in 120mL DMF dimethylformamide), and 5g Li₅FeO₄ (Dᵥ₅₀: 500nm) is added. At 60°C, a dispersion is obtained by magnetic stirring for 4h. The dispersion is transferred into a disposable syringe and is put into an electrostatic spinning instrument with the following parameters: a diameter of a spinneret is 1.0mm; a static high voltage is 20kv; a receiving distance is 15cm; an advance speed of the syringe is 2mL/h; a spinning time is 60h; and an aluminum foil is closely attached to the receiving roller to receive a spinning solution, and a carbon fiber lithium supplement film precursor is obtained after spinning. The above precursor is transferred to a muffle furnace and preoxidized under the following conditions: an initial temperature is 20°C; a heating rate is 3°C/min; a holding temperature is 280°C; a soaking time is 2h; and a nitrogen flow is 30ml/min. And then a carbonization treatment is carried out, and the carbonization treatment uses the following conditions: an initial temperature is 25°C; a heating rate is 5°C/min; a holding temperature is 500°C; and a soaking time is 2h; a nitrogen flow rate is 40ml/min to obtain a composite carbon fiber lithium supplement film with a mass of 9.87g, an areal density of 30.6mg/1540mm² (1.99mg/cm²), a fiber diameter of 650nm and a film thickness of 8µm, and the conductivity is 120.7S/cm. The carbon fiber lithium supplement film has good tensile property, and may be folded 100 times, still maintaining good integrity. The subsequent preparation of a full battery is described below.

### Embodiment 3

Preparation of carbon fiber lithium supplement film: 2.5g PAN (polyacrylonitrile, with a number average molecular weight of 15,000) is dissolved in 24mL DMF dimethylformamide), and 5g Li₅FeO₄ (Dᵥ₅₀: 500nm) is added. At 60°C, a dispersion is obtained by magnetic stirring for 4h. The dispersion is transferred into a disposable syringe and is put into an electrostatic spinning instrument with the following parameters: a diameter of a spinneret is 1.0mm; a static high voltage is 20kv; a receiving distance is 15cm; an advance speed of the syringe is 2mL/h; a spinning time is 12h; and an aluminum foil is closely attached to the receiving roller to receive a spinning solution, and a carbon fiber lithium supplement film precursor is obtained after spinning. The above precursor is transferred to a muffle furnace and preoxidized under the following conditions: an initial temperature is 20°C; a heating rate is 3°C/min; a holding temperature is 280°C; a soaking time is 2h; and a nitrogen flow is 30ml/min. And then a carbonization treatment is carried out, and the carbonization treatment uses the following conditions: an initial temperature is 25°C; a heating rate is 5°C/min; a holding temperature is 500°C; and a soaking time is 2h; a nitrogen flow rate is 40ml/min to obtain a composite carbon fiber lithium supplement film with a mass of 6.21g, an areal density of 19.13mg/1540mm² (1.24mg/cm²), a fiber diameter of 850nm and a film thickness of 2.5µm, and the conductivity is 40.5S/cm. The carbon fiber lithium supplement film has good tensile property, and may be folded 100 times, still maintaining good integrity. The subsequent preparation of a full battery is described below.

### Embodiment 4

Preparation of carbon fiber lithium supplement film: 7.5g PAN (polyacrylonitrile, with a number average molecular weight of 15,000) is dissolved in 60mL DMF (dimethylformamide), and 5g Li₅FeO₄ (Dᵥ₅₀: 500nm) is added. At 60°C, a dispersion is obtained by magnetic stirring for 4h. The dispersion is transferred into a disposable syringe and is put into an electrostatic spinning instrument (Beijing Yongkang Leye Technology Development Co., Ltd, M01-001) with the following parameters: a diameter of a spinneret is 1.0mm; a static high voltage is 20kv; a receiving distance is 15cm; an advance speed of the syringe is 2mL/h; a spinning time is 30h; and an aluminum foil is closely attached to the receiving roller to receive a spinning solution, and a carbon fiber lithium supplement film precursor is obtained after spinning. The above precursor is transferred to a muffle furnace and preoxidized under the following conditions: an initial temperature is 20°C; a heating rate is 3°C/min; a holding temperature is 280°C; a soaking time is 2h; and a nitrogen flow is 30ml/min. And then a carbonization treatment is carried out, and the carbonization treatment uses the following conditions: an initial temperature is 25°C; a heating rate is 5°C/min; a holding temperature is 500°C; and a soaking time is 2h; a nitrogen flow rate is 40ml/min to obtain a composite carbon fiber lithium supplement film with a mass of 8.95g, an areal density of 27.54mg/1540mm² (1.78mg/cm²), a fiber diameter of 650nm and a film thickness of 8µm, and the conductivity is 99.7S/cm. The carbon fiber lithium supplement film has good tensile property, and may be folded 100 times, still maintaining good integrity. The subsequent preparation of a full battery is described below.

### Embodiment 5

Preparation of carbon fiber lithium supplement film: 20g PAN (polyacrylonitrile, with a number average molecular weight of 15,000) is dissolved in 120mL DMF (dimethylformamide), and 5g Li₅FeO₄ (Dᵥ₅₀: 500nm) is added. At 60°C, a dispersion is obtained by magnetic stirring for 4h. The dispersion is transferred into a disposable syringe and is put into an electrostatic spinning instrument with the following parameters: a diameter of a spinneret is 1.0mm; a static high voltage is 20kv; a receiving distance is 15cm; an advance speed of the syringe is 2mL/h; a spinning time is 60h; and an aluminum foil is closely attached to the receiving roller to receive a spinning solution, and a carbon fiber lithium supplement film precursor is obtained after spinning. The above precursor is transferred to a muffle furnace and preoxidized under the following conditions: an initial temperature is 20°C; a heating rate is 3°C/min; a holding temperature is 280°C; a soaking time is 2h; and a nitrogen flow is 30ml/min. And then a carbonization treatment is carried out, and the carbonization treatment uses the following conditions: an initial temperature is 25°C; a heating rate is 5°C/min; a holding temperature is 500°C; and a soaking time is 2h; a nitrogen flow rate is 40ml/min to obtain a composite carbon fiber lithium supplement film with a mass of 12.4g, an areal density of 45.9mg/1540mm² (2.98mg/cm²), a fiber diameter of 450nm and a film thickness of 10µm, and the conductivity is 128.9S/cm. The carbon fiber lithium supplement film has good tensile property, and may be folded 100 times, still maintaining good integrity. The subsequent preparation of a full battery is described below.

### Embodiment 6

Preparation of carbon fiber lithium supplement film: 3.75g PAN (polyacrylonitrile, with a number average molecular weight of 15,000) is dissolved in 24mL DMF (dimethylformamide), and 5g Li₅FeO₄ (Dᵥ₅₀: 500nm) is added. At 60°C, a dispersion is obtained by magnetic stirring for 4h. The dispersion is transferred into a disposable syringe and is put into an electrostatic spinning instrument with the following parameters: a diameter of a spinneret is 1.0mm; a static high voltage is 20kv; a receiving distance is 15cm; an advance speed of the syringe is 2mL/h; a spinning time is 12h; and an aluminum foil is closely attached to the receiving roller to receive a spinning solution, and a carbon fiber lithium supplement film precursor is obtained after spinning. The above precursor is transferred to a muffle furnace and preoxidized under the following conditions: an initial temperature is 20°C; a heating rate is 3°C/min; a holding temperature is 280°C; a soaking time is 2h; and a nitrogen flow is 30ml/min. And then a carbonization treatment is carried out, and the carbonization treatment uses the following conditions: an initial temperature is 25°C; a heating rate is 5°C/min; a holding temperature is 500°C; and a soaking time is 2h; a nitrogen flow rate is 40ml/min to obtain a composite carbon fiber lithium supplement film with a mass of 6.84g, an areal density of 21mg/1540mm² (1.36mg/cm²), a fiber diameter of 850nm and a film thickness of 3.5µm, and the conductivity is 60.9S/cm. The carbon fiber lithium supplement film has good tensile property, and may be folded 100 times, still maintaining good integrity. The subsequent preparation of a full battery is described below.

### [Preparation of Positive Electrode]

Lithium iron phosphate, conductive carbon black and polyvinylidene fluoride (PVDF) are mixed according to a mass ratio of 94:3:3, NMP with a the mass composite ratio of N-methylpyrrolidone (NMP): PVDF=98:2 is added to prepare a positive paste, then the paste is coated on an aluminum foil by coating method, a positive electrode sheet is prepared by high-temperature baking, cold pressing and slicing, and a weight of the electrode sheet is recorded, 354 mg/1540mm².

### [Preparation of Negative Electrode]

Graphite, conductive carbon black, sodium carboxymethyl cellulose (CMC Na) and styrene butadiene rubber (SBR) are mixed according to a mass ratio of 90:5:3:2, a deionized with a the mass composite ratio of (CMC and SBR)=98:2 is added to prepare a negative electrode paste, then the paste is coated on an aluminum foil by coating method, a positive electrode sheet is prepared by high-temperature baking, cold pressing and slicing, and a weight of the electrode sheet is recorded, 172 mg/1540mm².

### [Separator]

A polypropylene film is used.

### Production of Electrolytic Solution

Ethylene carbonate (EC), ethyl methyl carbonate (EMC) and diethyl carbonate (DEC) are mixed according to a volume ratio of 1:1:1, and then LiPF₆ is uniformly dissolved in the above solution to obtain an electrolytic solution. A concentration of LiPF₆ in this electrolytic solution is 1mol/L.

### Production of Button-type Half Battery

A positive electrode shell, a lithium supplement film layer, a separator, a metal lithium electrode sheet and a negative electrode shell are assembled in order, and then an electrolytic solution is injected to assemble a button-type half battery.

### Production of Button-type Full Battery

A positive electrode shell, a positive electrode sheet, a lithium supplement film layer, a separator, a negative electrode sheet and a negative electrode shell are assembled in order, and then an electrolytic solution is injected to assemble a button-type full battery.

### Comparative example 1

The carbonized composite lithium supplement carbon fiber in Example 1 is directly mixed in a positive paste after grinding. The composite carbon fiber after grinding is in sheet shape, with a length≤1mm. The composite carbon fiber after grinding is mixed with a positive electrode material and used as a positive electrode, and then a button-type full batter is assembled.

### Comparative example 2

The preparation method is similar to that of Embodiment 1, the difference is that a positive electrode lithium supplement agent with a large particle size (5g Li₅FeO₄, Dᵥ₅₀>1µm) is coated in a carbon fiber with a diameter of 1µm, then is assembled into a button-type full battery.

### Battery Test

The assembled battery is put in a high and low temperature box, the temperature inside the box is 25°C, after standing for Imin, it is charged to 4.5V at 0.3C, after standing for Imin, it is charged to 4.5V at 0.1C, and a sum of the two charging capacities is recorded as a charging capacity; and after standing for Imin, it is discharged to 2.5 V according to a current density of 0.3C, and then is discharged to 2.0V according to the current density of 0.1C, and the sum of the two discharge capacities is recorded as a discharge gram capacity, and a percentage of the charge gram capacity and the discharge gram capacity is a first coulomb efficiency.

**Table1: Data of lithium supplement film prepared by Embodiments 1-6 and Comparative examples 1-2**

| | Content of lithium supplement agent in carbon fiber lithium supplement film % | Areal density of the carbon fiber lithium supplement film mg/cm² | Thickness of the carbon fiber lithium supplement film µm |
|---|---|---|---|
| Embodiment 1 | 67 | 1.49 | 5 |
| Embodiment 2 | 50 | 1.99 | 8 |
| Embodiment 3 | 80.5 | 1.24 | 2.5 |
| Embodiment 4 | 55.8 | 1.78 | 8 |
| Embodiment 5 | 40.3 | 2.98 | 10 |
| Embodiment 6 | 73 | 1.36 | 3.5 |
| Comparative example 1 | - | - | - |
| Comparative example 2 | 67 | 1.49 | 5 |

**Table 2: Performance of button-type full battery prepared by Embodiments 1-6 and Comparative examples 1-2**

| | Charge gram capacity mAh/g | Discharge gram capacity mAh/g | First coulombic efficiency % |
|---|---|---|---|
| Embodiment 1 | 156.4 | 152.5 | 97.5% |
| Embodiment 2 | 153.2 | 142.6 | 93.1% |
| Embodiment 3 | 143.2 | 121.6 | 84.9% |
| Embodiment 4 | 155.3 | 150.33 | 96.8% |
| Embodiment 5 | 138.5 | 124.7 | 90% |
| Embodiment 6 | 149.8 | 141.2 | 94.3% |
| Comparative example 1 | 121.2 | 110.6 | 91.3% |
| Comparative example 2 | 149.6 | 143.5 | 95.9% |

It may be seen from the above results that Embodiment 1 has better electrical performance than Embodiments 2-6. At the same content of lithium supplement agent (content ratio with the positive active material), with the increase of carbon content, the conductivity of the lithium supplement film increases, and the increase of the thickness of the lithium supplement film leads to the obstruction of the ion transmission path, and the charge and discharge performance of the whole battery decreases; and with the decrease of carbon content, the thickness of the lithium supplement film decreases and the conductivity of the lithium supplement film decreases, and a poor electronic conductivity leads to a poor charge discharge performance of the full battery. When the lithium supplement agent accounts for 67% of the composite carbon fiber lithium supplement film, the conductivity is relatively high, thereby giving the best charge and discharge performance and the highest first turn coulomb efficiency.

In contrast, a first discharge gram capacity and a first coulomb efficiency of Comparative examples 1 and 2 have not been effectively improved. Compared with the Comparative example 1, the carbon fiber lithium supplement film placed on the positive electrode surface is more conducive to the performance of lithium supplement agent; and compared with Comparative example 2, the composite carbon fiber obtained by a lithium supplement agent with a small particle has a smaller and more uniform diameter, a gap in the fiber is more conducive to ion migration, and the electrical performance is the best.

It should be noted that the present application is not limited to the foregoing embodiments. The foregoing embodiments are merely examples, and embodiments having substantially the same constitution as the technical idea and exerting the same effects within the technical solution of the present application are all included within the technical scope of the present application. In addition, various modifications may be made to the embodiments by persons skilled in the art without departing from the spirit and scope of the present application, and other embodiments that are constructed by combining some of the constituent elements of the embodiments are also included in the scope of the present application.

## Claims

1. A carbon fiber lithium supplement film, comprising a carbon fiber and a lithium supplement agent embedded in the carbon fiber, a diameter of the carbon fiber is 450nm-850nm, and a mass percentage the lithium supplement agent in the carbon fiber lithium supplement film is 40%-80.5%, and optionally 55%-75%.

2. The carbon fiber lithium supplement film according to claim 1, wherein a thickness of the carbon fiber lithium supplement film is 2µm-10µm, or optionally 3.5µm-8µm.

3. The carbon fiber lithium supplement film according to claim 1 or 2, wherein a conductivity of the carbon fiber lithium supplement film is 40S • cm⁻¹-130S • cm⁻¹, and optionally 60S • cm⁻¹-100S • cm⁻¹.

4. The carbon fiber lithium supplement film according to any one of claims 1-3, wherein the lithium supplement agent is in a form of a particle, and a particle size of the particle Dᵥ₅₀≤850nm, and optionally 200nm-550nm.

5. The carbon fiber lithium supplement film according to any one of claims 1-4, wherein an areal density of the carbon fiber lithium supplement film is 0.8mg/cm²-3mg/cm², and optionally 1.2mg/cm²-1.8mg/cm².

6. The carbon fiber lithium supplement film according to any one of claims 1-5, wherein the lithium supplement agent is one or more of Li₅FeO₄, Li₆CoO₄, Li₂O and Li₂S.

7. A method for preparing a carbon fiber lithium supplement film, containing the following steps:
(1) A polymer being dissolved in a solvent, then a lithium supplement agent being added and dispersed to obtain a dispersion;
(2) The dispersion in step (1) being electrospun to make a carbon fiber lithium supplement film precursor;
(3) The carbon fiber lithium supplement film precursor being pre-oxidized and carbonized to obtain a carbon fiber lithium supplement film; and
the carbon fiber lithium supplement film comprising a carbon fiber and a lithium supplement agent embedded in the carbon fiber, a diameter of the carbon fiber being 450nm-850nm, and a mass percentage the lithium supplement agent in the carbon fiber lithium supplement film being 40%-80.5%, and optionally 55%-75%.

8. The method according to claim 7, wherein the polymer is one or more of polyacrylonitrile, polyvinyl alcohol and polyacrylic acid; and/or, a concentration of the polymer in the solvent is 0.5g/10ml⁻³g/10ml, and optional 0.8g/10ml-2g/10ml.

9. The method according to claim 7 or 8, wherein the solvent is selected from one or more of dimethylformamide, dimethylsulfoxide and sulfolan.

10. The method according to any one of claims 7-9, wherein in the electrospinning, an electrostatic high voltage is 10kv-25kv, and optionally 15kv-20kv; and/or
a receiving distance is 8cm-30cm, and optionally 10cm-25cm; and/or
a spinning rate is 1mL/h to 6mL/h, and optionally 1.5mL/h to 4mL/h; and/or
a spinning time is 12h-60h, and optional 24h-48h.

11. The method according to any one of claims 7-10, wherein in the pre-oxidation, an initial temperature is 10°C-30°C, and optionally 22°C-28°C; and/or
a heating rate is 1°C/min-5°C/min, and optionally 2°C/min-4°C/min; and/or
a holding temperature is 250°C-300°C, and optionally 260°C-290°C; and/or
a soaking time is 1h-5h, and optionally 2h-3h; and/or
a gas flow is 15ml/min-50ml/min, and optionally 20ml/min-40ml/min.

12. The method according to any one of claims 7-11, wherein in the carbonization treatment, an initial temperature is 15°C-30°C, and optionally 22°C-28°C; and/or
a heating rate is 2°C/min-8°C/min, and optionally 3°C/min-7°C/min; and/or
a holding temperature is 400°C-600°C, and optionally 450°C-550°C; and/or
a soaking time is 1h-5h, and optionally 2h-4h; and/or
a gas flow is 20ml/min-60ml/min, and optionally 30ml/min-50ml/min.

13. A secondary battery, comprising the carbon fiber lithium supplement film according to claims 1-6 or the carbon fiber lithium supplement film prepared according to the method in claims 7-12.

14. A power consumption device, comprising the secondary battery according to claim 13.
